Europäisches Patentamt

European Patent Office

Office européen des brevets

(19)

(11) Publication number: **0 074 697**

A2

(12) **EUROPEAN PATENT APPLICATION**

(21) Application number: **82201435.3**

(22) Date of filing: **17.05.82**

(51) Int. Cl.³: **G 01 B 11/16**
**G 01 D 5/30**

(30) Priority: **18.05.81 US 265031**
**26.04.82 US 371321**

(43) Date of publication of application:
**23.03.83 Bulletin 83/12**

(84) Designated Contracting States:
**AT BE CH DE FR GB IT LI LU NL SE**

(60) Publication number of the earlier application
in accordance with Art. 76 EPC: **0 067 531**

(71) Applicant: **Scott, David R.**
**44064 North 28th Street**
**Lancaster California 93534(US)**

(71) Applicant: **Rhoades, Thomas S.**
**420, Buckeye Drive**
**Colorado Springs Colorado 80919(US)**

(72) Inventor: **Scott, David R.**
**44064 North 28th Street**
**Lancaster California 93534(US)**

(72) Inventor: **Rhoades, Thomas S.**
**420, Buckeye Drive**
**Colorado Springs Colorado 80919(US)**

(74) Representative: **Stephens, Michael John et al,**
**M.J. Stephens & Co. Royal Building 11 St. Andrew's**
**Cross**
**Plymouth Devon PL1 2DS(GB)**

(54) **Machine monitoring system.**

(57) A system is provided for collecting and interpreting data indicative of the effect of at least one of the plurality of forces acting on a machine for forming and/or bending metals (252). The system comprises one or more structural moment detectors (251), and electronic circuitry (253) for processing and manipulating signals derived from the detector or detectors (251) in such a manner as to produce secondary signals indicative of the effect being monitored. In one embodiment, the electronic circuitry associated with each structural moment detector (251) is provided in the same housing as the detector to form a unitary device termed a structural information detector.

Fig- 5

Croydon Printing Company Ltd

MACHINE MONITORING SYSTEM

This invention relates to machine monitoring systems for collecting and interpreting data reflecting the effect of at least a selected one of a plurality of forces acting on a rotating or reciprocating machine such as a machine for forming and/or bending metals.

Structural moment detectors or flexural rigidity sensors are known which are constituted by optical sensors in the form of autocollimators insensitive to linear dynamic motion but responsive to angular deflection of one end of the sensor with respect to the other. For example, such sensors are disclosed in the patent to Rossire, U. S. No. 3,229,511 and in the publication entitled "The Structural Rigidity Sensor: Applications in Non-Destructive Testing", published by the Air Force Systems Command, United States Air Force (Frank J. Seiler Research Laboratory, Publication SRL-TR-75-0017, October, 1975). See also the U.S. patents to Okubo Nos. 4,159,422 issued June 26, 1979 and 4,164,149 issued August 14, 1979.

Systems which employ structural moment detectors to measure and record certain effects of forces acting on a structure are also disclosed in the publications described above. For example, the Rossire patent discloses an aircraft attitude control system in which a structural moment detector is used to sense wing loading and automatically adjust the attitude of the aircraft to maintain wing loading within safe operational limits.

It is an object of the present invention to improve on the systems referred to above as regards their application to the monitoring of rotating or reciprocating machines.

Accordingly, the present invention provides a system for collecting and interpreting data indicative of the effect of at least a selected one of a plurality of forces acting on a machine for forming and/or bending metals, characterised in that said system comprises, in combination:

    a)    at least one structural moment detector carried by said machine for generating output signals in response to said plurality of forces acting on said machine;

    b)    processing means for processing said output signals to modify the information content thereof, including, where necessary, rejecting components of said signals indicative of the effects of extraneous forces other than said selected one; and

    c)    signal-manipulating means for manipulating the processed signals output by the processing means to provide secondary signals responsive to the condition of said machine as a result of the application of said selected force or forces.

The systems of the invention can employ substantially conventional structural moment detectors, the output of which is simply raw data which does not directly indicate or give useful information concerning the effect of forces acting on a structure to which the sensor is attached. In such cases, the raw data from the sensors is conditioned and processed by external electronics, including microprocessors and computational software, usually necessarily located at locations remote from the sensors, themselves.

Alternatively the systems of the invention can employ structural information detectors in which the raw signal from the optical sensor of an optical structure moment detector is converted and processed within a unitary device (either a single-piece device or a multi-component device in which each of the components is assembled to form an integral unit) such that the electrical signal output of the device has a directly useful information content which can be displayed or recorded by any conventional means or which can be directly utilized to activate control systems.

As used herein, the term "forces acting on a structure" is intended to include not only primary external forces applied to the structure but also includes secondary external or internal effects which flow from the application of external forces or changes in the environment of the structure, such as, for example, strain energy released within the structure as a result of cracking, thermal stresses, gravity-induced effects, electromagnetic forces and stresses, and the like.

The term "surface" as used herein is intended to mean and include not only the exterior surface of a structure, but also any natural or artificial internal surface thereof including, without limiting the generality thereof, planes passing through an axis of the structure.

The term "surface coordinate vector" as used herein is intended to mean both the normal and the tangent to the surface of a structure and any angle therebetween.

The invention will now be particularly described, by way of example, with reference to the accompanying diagrammatic drawings, in which:

Fig. 1 is a sectional view of a typical prior art structural moment detector;

Fig. 2 is a typical schematic of the LED driver circuit of the structural moment detector of Fig. 1;

Fig. 3 is a typical schematic of the readout electronics circuits of the structural moment detector of Fig. 1:

Fig. 4 is a schematic drawing of a monitoring system embodying the invention;

Fig. 5 is a schematic perspective view of a machine tool to which the monitoring system of Fig. 4 has been applied;

Fig. 6 is a generalised block diagram illustrating the major sub-components of a structural information detector suitable for use in the systems of Figures 4 and 5;

Fig. 7 is a circuit schematic depicting an analog circuit which functions to electrically interface the optical detector of the structural information detector of Figure 6 with signal-processing electronics;

Fig. 8 is a circuit schematic depicting the current source circuit for light-emitting diodes of the optical sensor portion of the Figure 6 structural information detector;

Fig. 9 is a sectional view of one particular form of the Figure 6 structural information detector;

Fig. 10 is a perspective view of another particular form of the Figure 6 structural information detector in which the components are carried by a semiconductor substrate; and

Fig 11 is a perspective view of an optical system usable in the Figure 6 structural information detector as well as in the structural moment detectors or flexural rigidity sensors of the prior art.

As used herein, the term "structural moment detector" means a device which measures the integral of the structure moment between two points on the structure. Such devices are known in the art, but, for clarity, a typical structural moment detector will be briefly described with reference to

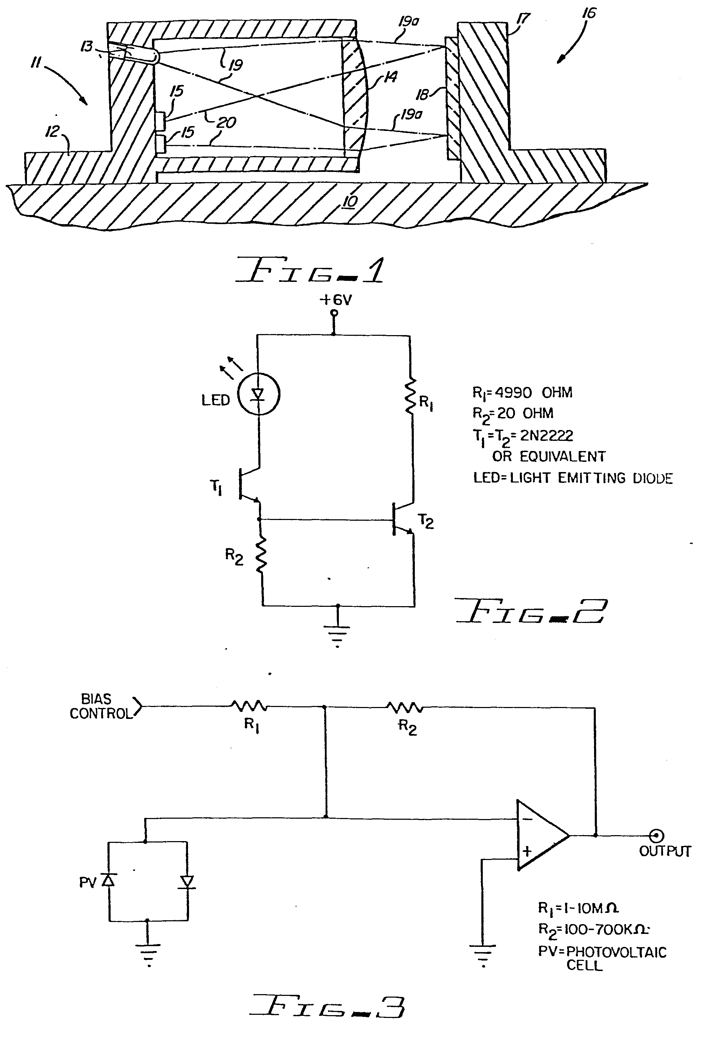

Figs. 1-3 and the accompanying descriptive material.

The structural moment detector shown in Figure 1 is basically an autocollimator that is insensitive to linear dynamic motions but responds to angular deflection of one end of the sensor with respect to the other. The structural moment detector illustrated consists of two separate parts which are mounted at spaced locations on a beam 10. One of the parts 11 is a support bracket 12 which carries a light-emitting diode (LED) 13, a collimating lens 14 and dual photovoltaic detectors 15. The other part 16 of the structural moment detector consists of a support bracket 17 which carries a plane front mirror 18. The two parts 11 and 16 are suitably joined by a bellows or other hood member (omitted for clarity of illustration) to exclude extraneous light. The LED 13 emits an infrared light beam 19 which is collimated by the collimating lens 14. The collimated light beam 19a impinges on the mirror 18 and, as indicated by the dashed lines 10, is reflected back through the collimating lens 14 to the photovoltaic cells 15. Angular motions, but not linear motions, of the mirror 18 result in varying amounts of infrared radiation reaching each of the photovoltaic cells 15. The difference in voltage output of the photovoltaic cells 15 is then proportional to the angular motion of the mirror 18 with respect to the cells 15.

Structural moment detectors of the Figure 1 form are capable of measuring the deflection of the beam with a resolution of 1 milliarc second ($4.85 \times 10^{-9}$ radians) with a range of $\pm 6$ arc seconds. Where such accuracy is not required, such devices can be fabricated which have a resolution of at least 1 arc second with a dynamic range of $\pm 3^{O}$. Such devices are capable of operating from DC to 50 MHz, the upper limit being established by the frequency limitation of the

- 6 -

photovoltaic cells.

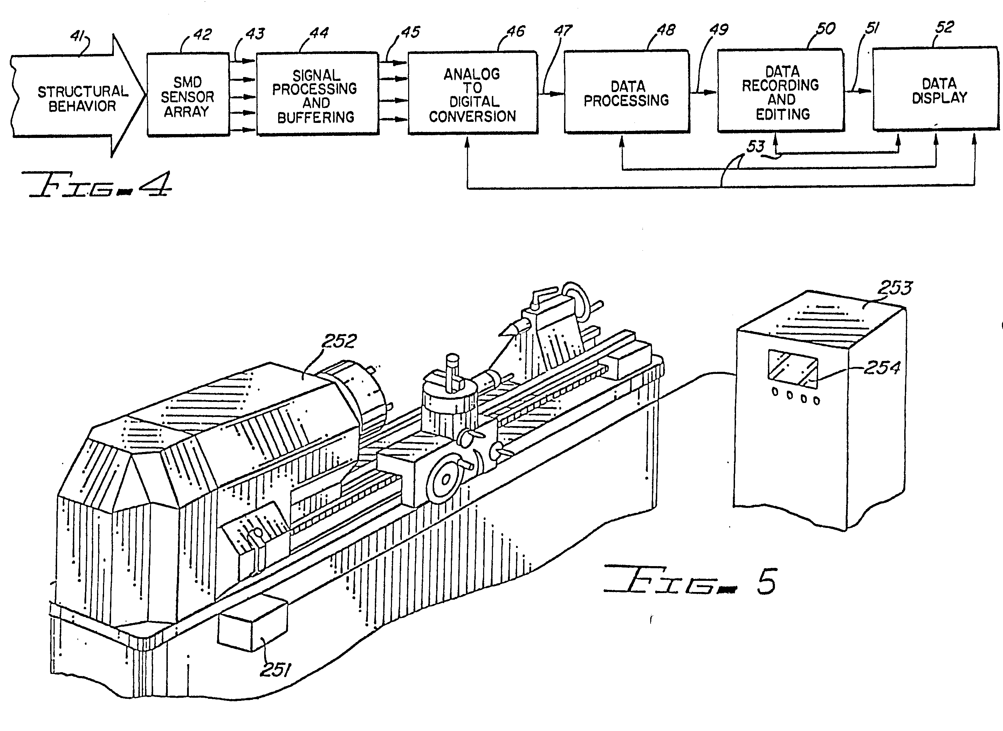

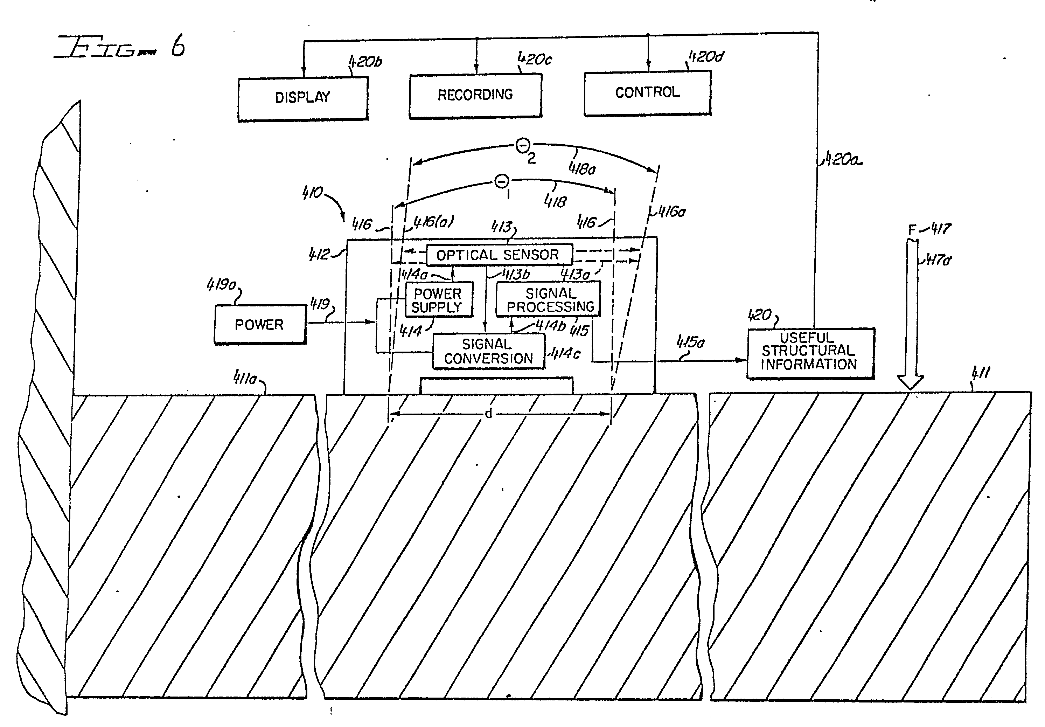

Typical circuits which are used in conjunction with the mechanical components of the structural moment detector of Fig. 1 are illustrated in Figs. 2 and 3. Fig. 2 is a schematic diagram of a suitable LED driver circuit which is a simple constant current source circuit which is required to provide a light source with constant light intensity. A typical suitable readout circuit is illustrated in Fig. 3, which depicts an analog output circuit consisting of a first stage amplifier with common mode rejection that permits linear operation of the photovoltaic cells.

The operation of the structural moment detector can be illustrated by reference to a simplified example of a cantilevered beam which is loaded and the structural moment detector is mounted at points a and b located near the supported end of the cantilevered beam. If the deflection of the beam is measured as $\theta$, the angle between surface tangents at points a and b, the output voltage of the photovoltaic cells is proportional to this angle, and according to the Area Moment Theorem

$$V_{out} \propto \theta = \frac{\int_a^b Mdx}{EI} = \frac{1}{EI} \int_a^b Mdx$$

where

    M is the applied moment between points a and b

    E is the modulus of elasticity

    I is the moment of inertia

    $\theta$ is the angular difference between surface tangents at points a and b

    x is the linear surface distance between points a and b.

If a load P is placed on the end of a beam of length L and is the distance between points a and b,

then

$$V_{out} \propto \theta = \frac{1}{EI} \frac{PL\delta}{2}$$

To illustrate the sensitivity of the structural moment detector, a load of 1 gram was placed at the end of an 8" cantilevered beam. The device was mounted near the support of the beam such that points a and b were 1.5" apart. With this load

$$V_{out} = 30 \text{ millivolts}$$

and

$$\theta = 1.3 \times 10^{-7} \text{ radians.}$$

Since it is impossible to load a structure without changing the total moment which occurs between two points on the structure, it is possible to use the structural moment detector as an extremely accurate and extremely sensitive sensor having a range which far exceeds that of conventional sensors of the prior art.

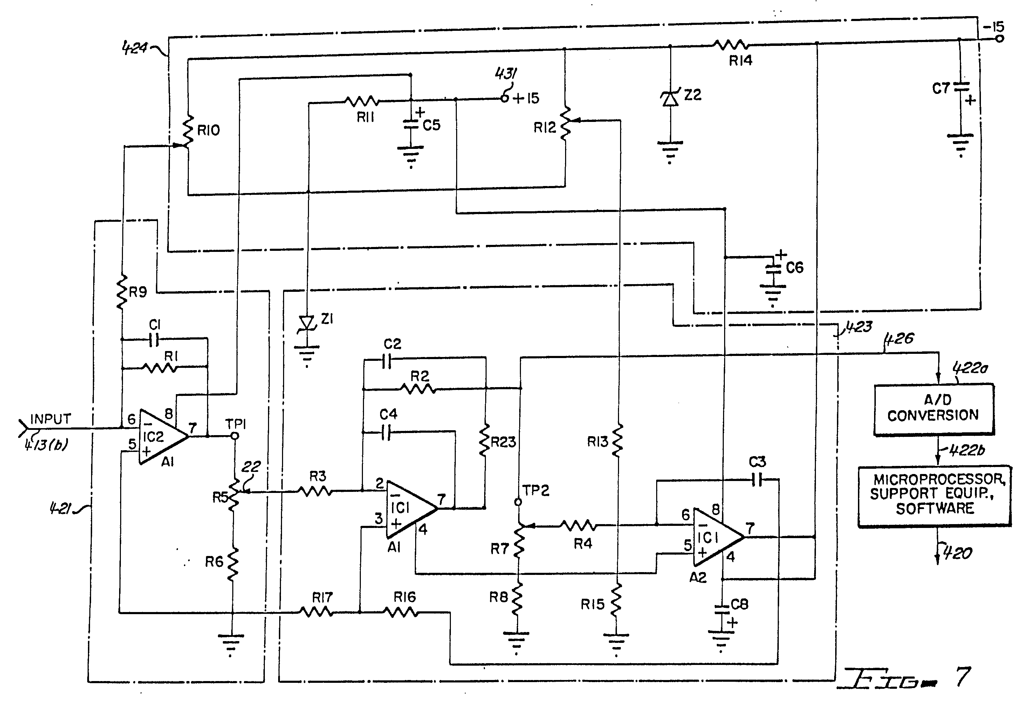

The general system of the invention is schematically illustrated in Fig. 4. As shown in Fig. 4, the structural behaviour 41, which is effected by the forces acting on the structure, are sensed by an array 42 of structural moment detectors (SMD's), located on the structure. The SMD's 42 are located on the structure so as to provide primary electronic signals 43 which are proportional to the structural behaviour parameter of interest. The primary electronic signals 43 from the SMD array 42 are fed to signal processing and buffering equipment 44, which includes electronic circuitry which modifies the information content of the primary signals 43 (e.g., rejection of background noise, rejection of signal components induced by other forces, etc.) and which electrically isolate the sensors from the remainder of the system. The processed signals 45 are then transmitted to analog-to-digital converters 46 which convert the analog information in the processed signals 45 to a digital format compatible with various digital processors, recorders, editors and/or display units. The digital signals 47 are then transmitted to a data processor 48 which will usually be a single-frame computer which is capable of accepting digital data and manipulating it in a predetermined, programmable fashion, in order to convert the digitized measurement information into a digital representation of the desired system data. The digital representation data 49 is optionally transmitted to data recording/editing equipment 50 which may provide for permanent recording of all or part of the acquired data for later use and which may, additionally, provide manual editing capability. The recorded and/or edited data 51 may optionally be transmitted to data display equipment 52 which provides visual display of the acquired data and, additionally, may provide for the predetermined alteration of the means by which the data processing equipment 48 is transforming acquired data or the manner in which data is digitized, recorded, edited and/or displayed. Feedback loops 53 may be optionally provided, through which the information at one stage is fed backwardly and/or forwardly to another stage of the system to provide improved accuracy, estimation, prediction or other similar functions. These feedback paths may be electrical, optical, mechanical and/or may involve human interpretations and adjustments.

According to this invention, systems are provided for monitoring the health of rotating, reciprocating and other moving machines having multiple components.

This invention is based on the real time assessment of the "vibration signature" of the machine.

Subsequently, this knowledge and information is applied to the design optimization of future machines as well as the prediction of the remaining lifetime of existing machines.

The concept of monitoring the vibration signature of a mechanical system for an indication of the mechanical health of the system is well established. Every operating mechanical system has a distinct vibration signature which is produced when the system is operating properly. When a malfunction occurs, the signature changes. Appropriate observation and analysis of the vibration signature can, therefore, provide an early indication of the severity and location of possible trouble and can help to prevent costly catastrophic failure.

The actual vibration signature of a machine contains many frequencies. This is a result of different components vibrating at various discrete frequencies and various mechanical resonances and nonlinear combinations of those signals in the machine. The resultant signal at a measurement point is therefore a complex vibration waveform which is processed to reduce it to its discret frequency components for analysis.

The machine monitoring system consists of sensors (vibration transducers), a signal processor (monitoring system) and suitable displays or alarm generating devices. Sensors commonly in use are the piezoelectric accelerometer and the inductive velocity transducer. While there is limited agreement on the specific crossover frequency, there is general agreement that vibration severity is proportional to velocity at relatively low frequencies and proportional to acceleration at high frequencies. Thus, the applications of the piezoelectric and velocity transducers are naturally separated by frequency. In addition, velocity transducers are generally rugged, operate over wide temperature ranges, produce relatively high signal- to-noise outputs, but are limited to about 1000 Hz. Piezoelectric accelerometers are more sensitive to contamination. Both have frequency ranges which are significantly influenced by the method of attachment to the machine.

Both the velocity transducer and the piezoelectric accelerometer respond to displacements perpendicular to their mounting surface. The SMD, however, measures the difference between planes perpendicular to the surface to which it is mounted, that is, the measurement motion is $90^{\circ}$ to that of other sensors.

The significant point is not that suitable mountings will permit direct replacement of velocity transducers, strain gauges and piezoelectric accelerometers. Rather, the significant point is that the SMD responds to transverse and longitudinal waves in a body which cause the surface to deflect as little as $3.5 \times 10^{-9}$ radians across the 1.5 inch length of the sensor (a surface displacement of $5.3 \times 10^{-3}$ microinches).

In the measurement of these ultra small deflections, the SMD has a frequency response which is essentially flat from 0 to 40 KHz. Combinations of velocity and acceleration sensors in the best VMS systems currently in use provide a flat response from 0 to 20 KHz only.

In addition to this extreme sensitivity and wide frequency response, the SMD is rugged and well-suited to field and plant use. It requires a minimum of electronics (standard buffer amplifiers and power supplies) to obtain a signal and it can be fabricated for less than $100. The SMD can also be fabricated to provide less sensitivity for less cost. The cost and sensitivity are design parameters and trade-off analyses are made for each application.

Thus, with the present machine monitoring system, SMD's are not merely used to replace conventional sensors. Rather, a system is provided which, using the unique measurement provided by the SMD, analytically and experimentally correlates and makes understandable the measurement of and meaning of vibration and mechanical health of complex equipment.

Specifically, the present machine monitoring system can be used to :

(1)  provide a warning if the structure approaches or exceeds operating limitations;

(2)  permit better use of lightweight, efficient structural design.  If pending failure can be predicted more accurately, design safety factors can be reduced.  This translates to lower cost and higher performance.

(3)  extend the life of existing systems.  If the remaining fatigue life of a system can be more accurately defined, replacement can be delayed; and

(4)  provide "expert witness testimony."  The recorded information positively establishes conditions prior to an incident or failure.

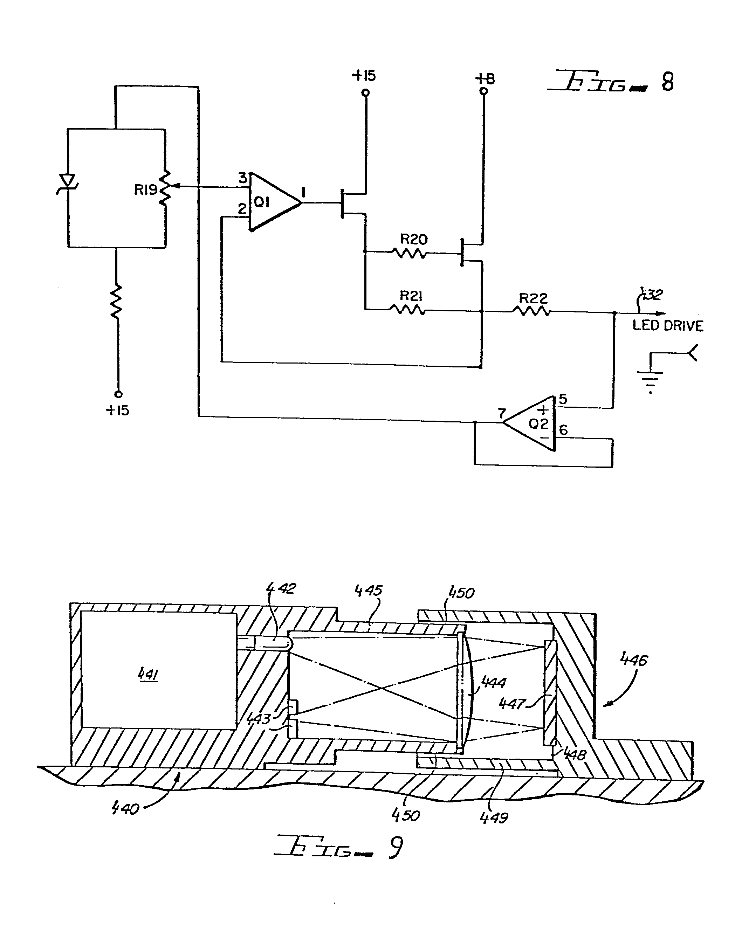

Referring to Figure 5, which illustrates a typical application of the machine monitoring system, SMD sensors 251 are mounted at one or more locations on the frame of a complex machine such as the lathe 252 illustrated in Fig. 5.  The output of the sensors 251 is fed to an electronics/data processing package 253 which is provided with appropriate data recorders 254 and displays.

The SMD sensors used in Figures 4 and 5 are structural moment detectors (SMD's), for example, of the prior art form shown in Figure 1.  These sensors can alternatively be implemented by means of "structural information detectors" in which raw data from a structural moment detector is converted and processed within a unitary device (including the SMD) such that the signal output from the device has a directly useful information content.

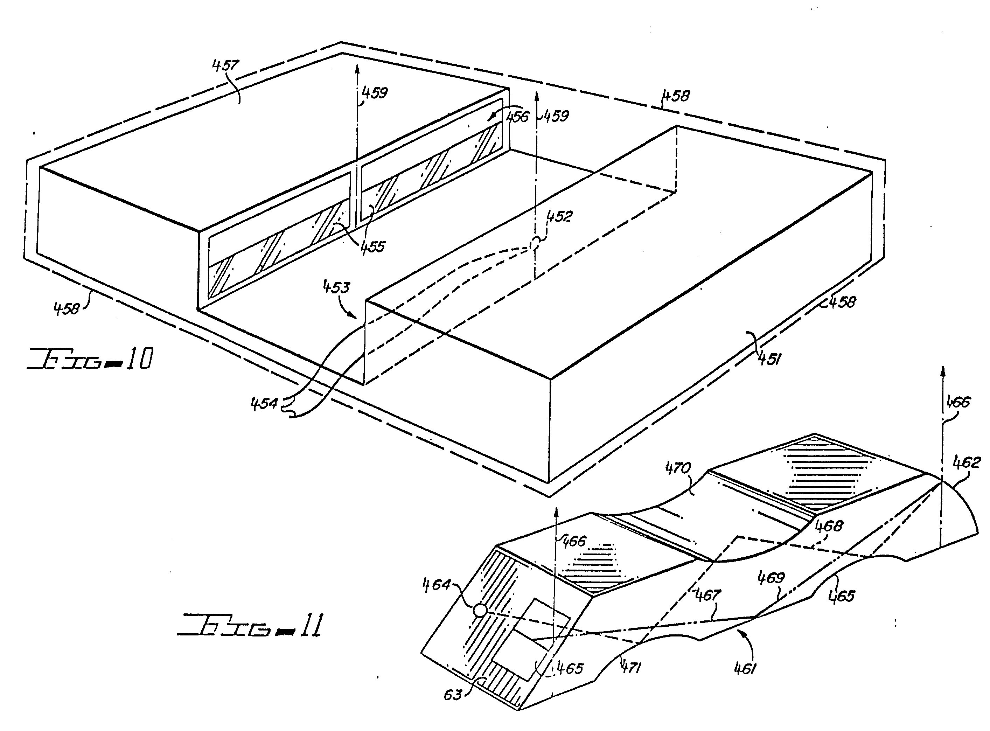

Fig. 6 is a block diagram illustrating the major sub-components of a structural information detector.

suitable for use in the systems described hereinbefore. The structural information detector, generally indicated by the reference numeral 410, is depicted for purposes of illustration as being mounted upon a simple cantilevered beam 411 and consists of a housing 412, an optical sensor 413, sensor power supply 414, raw signal conversion circuitry 414c and signal-processing electronics, including a microprocessor and appropriate software 415. The optical sensor 413, for example, a structural moment detector of the type generally disclosed in U.S. patent 4,287,511 (sometimes also known as a "flexural rigidity sensor") measures, as indicated by the dashed line 413a, the relative orientation of surface coordinate vectors which are, as illustratively depicted in Fig. 6, normals 416 to the surface 411a of the beam 411. If a force F (417) is applied in the direction of the arrow 417a to the beam 411, resultant bending of the beam 411 will cause a change in the relative orientation of the surface coordinate vectors 416 to the positions indicated by the dashed lines 416a, i.e., from the angular orientation 418 $\theta 1$ (shown in Fig. 6, illustratively, as $180^{\circ}$) to an angular orientation 418a $\theta 2$ which (as illustratively depicted in Fig. 6) is greater than $\theta 1$. Power 419 from an external power source 419a is supplied to the circuitry 414 which, as explained below, provides a regulated power supply 414a to the optical sensor 413. The raw data 413b from the optical sensor 413, which could be a variable voltage or a variable current, is supplied to the raw signal conversation portion of the circuitry 414, which converts the raw data, as will be further explained below, to a form which is the input 414b to the signal and data-processing electronics and software 415, which processes the converted signal 414b and provides, as the output 415a of the structural information detector 410, a signal which embodies useful structural information 420 which directly indicates the effect of the force F acting on the beam 411. As indicated by the line 420a, the useful structural information 420 can be utilised in any or all of a variety of ways, i.e., it can be used as the input to a direct display 420b which may be a simple galvanometric meter, liquid crystal display, light emitting diode display, cathode ray tube or the like. Also or alternatively, the useful structural information 420 can be used as the input to a semi-permanent or permanent recording device 420c, such a paper recorder , magnetic recorder , semiconductor storage device , bubble memory storage device , or holographic storage device . Also or alternatively, the useful structural information 420 can form the input to various control devices 420d such as servomotors and other similar electromechanical devices.

As will be appreciated by those skilled in the art, it may be necessary or desirable in certain end-use applications to employ an array of structural information detectors of the type generally illustrated in Fig. 6, in which case it may be necessary or desirable to provide communication paths between some or all of the individual structural information detectors in the array and/or with suitable central data display, recording and/or control components, as well as with additional hardware and software which correlate the useful structural information outputs of the individual structural moment detectors in the array. These details have been omitted for the purpose of clarity.

The raw data output 413b of the optical sensor 413 is (referring to Fig. 7) the input to the signal processing electronics, including computational software therein depicted. The function of the circuitry depicted in Fig. 7 is to convert the raw data input 413b from the optical sensor into data suitable for electronic data processing and then to perform the data-processing function to yield a signal, the components of which directly provide useful structural information. According to the presently preferred embodiment of the structural information detector, the conversion is performed with analog electronics, rather than digital. The analog electronics perform two distinct functions. First, the output signal 413b from the optical sensor is measured and converted to a proportional voltage in a voltage follower circuit which, for clarity of illustration, are those components which are located within the dashed line 421. The second function is to amplify the proportional voltage signal from the voltage follower circuit 421 by feeding it through a gain control 422 into an amplifier which, for purposes of clarity of description, are those components located within the dashed line 423. The voltage follower circuit 421 operates as a short circuit load for the photovoltaic cells of the optical sensor. Feedback is added in the amplifier circuit 423 to shape the upper end of the frequency response so that spurious high frequency noise is attenuated. This function is performed by applying the output of IC1 (pin 7) to the input (pin 6) of IC2 through a voltage divider formed by R7-R8. IC2 acts as a low-pass filter. The output of IC2 (pin 7) is fed back through R16 to the input 3 of IC1 to act as an automatic bias adjustment. An offset voltage adjustment is provided to remove any bias due to photocell mismatch.

The gain control 422 provides a means of balancing the mechanical gain of different sensors and compensating for components variation. The nominal adjustment range is ±15%. The amplifier 423 is a high gain direct-coupled amplifier with feedback to further attenuate high frequency noise levels. Nominal gain is 1.5 volts/ microamp and the bandwidth is normally initially set at 50-500 Hz. In essence, A2 is a variable cut-off low-pass filter. If the DC case is considered, its output will seek a level such that the voltage presented to pin 3 of A1 is equal to that presented to pin 2 by the voltage follower circuit. The scaling of the system is such that

$$U_{null} = V_{int} \; (R17/R16+R17) = V_{in}$$

where $V_{int}$ is the integrator output, $V_{in}$ is the first stage and $U_{null}$ is the input to A1, pin 2. Thus, for low frequency, $V_{int}$ represents a scaled value equal to or greater than $V_{in}$ independent of the gain in the second stage of the amplifier. The implication of this is that the gain of the second stage can be set very high for frequencies above the autonumm roll-off without completely losing DC information.

Support and bias circuits which include the components which are, for clarity of illustration, enclosed within the dashed line 424 are provided to provide conditioned power and bias voltages for the components of the voltage follower 421 and amplifier 423.

The output 426 of the amplifier 423 is an analog signal which is converted to a digital signal in the A-D converter 422a. A non-limiting, illustrative, exmaple of a suitable analog-digital converter is manufactured by the U.S. firm Analog Devices under number HAS1202.

The signal-processing electronics also includes a microprocessor 425 and appropriate computational software which converts the output signal 422b of the A-D converter 422a into electrical signals 420 which directly provide data related to the effect of the force acting on the structure to which the structural information detector is attached. In the presently preferred embodiment, this component includes a microprocessor, the necessary supporting devices and a power supply, details of which are omitted for purposes of clarity because they are well-known to those skilled in the art. Suitable non-limiting examples of microprocessors which can be employed are the TI9000 or the Intel 8086.

All of the elements described in Figs. 7 and 8 may be fabricated on a printed circuit board using standard integrated circuits or on a single thick film substrate where the circuits have been wire bonded to the substrate. In the embodiment of the detector described in connection with Fig. 10, these components may be made as a single integrated circuit on the same semiconductor substrate chip used in fabricating the optical sensor.

Another function of the signal-processing electronics is to provide a precise current to the light emitting diode of the optical sensor.

Typical non-limiting, illustrative, values of the components of Fig. 7 are set forth below:

Voltage Follower/Amplifier

R1 - 220K
R5 - 1K
R6 - 2.2K
R9 - 2.2M
R23 - 82
A1 - Operational Amplifier LF353/2

Second Stage Amplifier

R2 - 680K
R3 - 10K
R4 - 1M
R7 - 100K
R8 - 10K R13 - 2.2M R15 - 220K R16 - 10K R17 - 1K C2 - 47PF C3 - 10MF C4 - 5PF A1 - Operational Amplifier LF 353/2 A2 - Operational Amplifier LF 353/2

Support and Bias Circuits

R10 - 100K R11 - 1.8K R12 - 100K R14 - 1.8K C5 - 10MF C6 - 10MF C7 - 10MF C8 - 10MF Z1 - LM336 Z2 - LM336

For the sake of clarity, the power supply circuitry has been separated from the circuitry of Fig.7 and is shown schematically in Fig. 8. The 15 volt power supply 431 is provided by the support and bias circuitry 424 of Fig. 7.

The power supply circuitry of Fig. 8 utilises two amplifiers in a high gain feedback arrangement to provide the necessary precise current 432 to the light emitting diode.

Typical non-limiting, illustrative, values of the components of Fig.8 are set forth below:

Power Supply

R18 - 3.3K
R19 - 10K
R20 - 10K
R21 - 10K
R22 - 47
C9 - 10MF
C10 - 10MF
IC3 - Operational Amplifier LF353/2
Q1 - 2N5457
Q2 - TIP21

Fig. 9   is a sectional view illustrating a particular form of structural information detector which consists of a first housing sub-assembly generally indicated by reference character 440 containing the sensor power supply/raw signal conversion/ signal-processing electronics 441 of Figs. 7 and 8 , a light emitting diode 442, a pair of photovoltaic detectors 443 and a collimating lens 444 carried proximate the open end of a barrel portion 445 formed in the housing 440.  A second housing sub-assembly, generally indicated by reference numeral 446, carries a plane surface mirror 447 on the inner end 448 of a mating barrel portion 449 formed in the housing sub-assembly 446.  Although a substantial clearance 450 is shown between the barrel portion 445 formed in the first housing sub-assembly 40 and the barrel portion 449 formed in the second housing sub-assembly 446, it will be understood by those skilled in the art that this clearance is shown only for the purpose of clarifying the mechanical relationship of the two housing sub-assemblies 440 and 446.  In actuality, the mating barrel portion 449 formed in the second housing sub-assembly 446 is shaped and dimensioned to receive the barrel portion 445 formed in the first housing sub-assembly 440 with an interference fit therebetween, to form a unitary structurally integrated device which excludes ambient light from the interior of the barrel portions 445 and 449 and which facilitates and assists in maintaining precise optical alignment of the two sub-assemblies.

Structural information detectors of the type depicted in Fig. 9 have been successfully manufactured and tested which are in the size range of as small as one inch in the major dimension. Present work indicates that, eventually, this can be reduced to 1/4-1/8" in the major dimension.

Fig. 10 illustrates another form of structural information detector in which all of its components are carried by any suitable semiconductor substrate, such as a silicon chip 451. The generally U-shaped chip 451 carries the light emitting diode 452 on an inner face 453 of one of the legs of the U-shaped chip and leads 454 for providing power to the light emitting diode. A pair of photovoltaic cells 455 are grown by known semiconductor manufacturing techniques on the inner face 456 of the opposing leg of the U-shaped chip 451. Bending of the chip 451 induced by bending of a structural member to which it is attached by any suitable technique, such as epoxy bonding, causes a variation in the light falling on the photocells 455, depending on the relative orientation of surface coordinate vectors (normals) 456. The circuitry of Figs. 7 and 8 is formed by known semiconductor manufacturing techniques in the portion 457 of the silicon chip 451. The entire chip is then received within a suitable housing indicated by the dashed lines 458 to protect the internal components from adverse ambient environmental effects and to prevent stray light from interfering with the operation of the optical components 452 and 455. As in the case of the embodiment of Fig. 9, devices such as those depicted in Fig. 10 can be manufactured in a size as small as 1/4-1/8" in the major dimension.

In the form of structural information detector depicted in Fig. 11, the components of the optical sensor 410 (Fig. 6) are carried by an elongate light transmission member, generally indicated by reference character 461, formed of a light-transmitting flexible material such as, for example, methacrylate polymers and copolymers known in the art. A concentrating lens 462 is formed in one end of the light-transmission member 61 and the other end 463 carries a light source 464 such as a LED and a pair of photocells 465 which generate electrical signals indicating the relative orientation of surface vector coordinates (normals) 466 to the surface of a structural member upon which the structural information detector is mounted. If desired, the length of the light-transmission path 467 can be lengthened by cutting or forming facets 468 in the external surfaces of the elongate light-transmitting member which will reflect light beams 468 transmitted from the LED to the concentrating lens 462 and which are then reflected 469 to the photocells 465. The entire optics system illustrated in Fig. 11, along with the sensor power supply/raw signal conversion/signal-processing electronics components of the structural information detector of Fig. 6, are then enclosed in a suitable housing to protect the optics and electronics components from adverse ambient conditions and from interference caused by stray light. The housing is omitted in Fig. 11 for purposes of clarity. Of course, by omission of the signal processing electronics, the Figure 11 optics system can be employed as a simple structural moment detector.

CLAIMS

1. A system for collecting and interpreting data indicative of the effect of at least a selected one of a plurality of forces acting on a machine (252) for forming and/or bending metals, characterised in that said system comprises, in combination:

    a) at least one structural moment detector (251) carried by said machine (252) for generating output signals in response to said plurality of forces acting on said machine (252);

    b) processing means (253) for processing said output signals to modify the information content thereof, including, where necessary, rejecting components of said signals indicative of the effects of extraneous forces other than said selected one; and

    c) signal-manipulating means (253) for manipulating the processed signals output by the processing means to provide secondary signals responsive to the condition of said machine (252) as a result of the application of said selected force or forces.

2. A system according to Claim 1, characterised in that the or each said structural moment detector (251) and its associated processing and signal-manipulating means (254) is constituted by a respective structural information detector (410), said detector (410) comprising, in combination:

    a) a housing (412) adapted to be attached to the surface of the aircraft structure (112);

    b) optical means (413) within said housing (412) for detecting the relative orientation (413a) of spaced surface coordinate vectors (416a) of said structure , and for generating primary signals (413b) in response to changes in said orientation;

c) circuit means (414c) within said housing (412) for converting said primary signals (413b) to a form usable by signal-processing electronics; and

d) signal-processing electronics means (415) within said housing (412), including computational software, for processing the converted primary signals (414b) to secondary signals (415a) which embody useful information which directly indicates the effect of at least one of a plurality of forces (F) acting on said structure.

3. A system according to Claim 2, characterised in that the optical means (413), circuit means (414c), and signal-processing electronics means (415) of the structural information detector (410) are carried by a single-piece semiconductor substrate (451) received within said housing (412).

4. A system according to Claim 2, characterised in that the housing (412) of the structural information detector (410) comprises first and second housing sub-assemblies (440,446) and in that:

a) said first housing sub-assembly (440) contains said circuit means (441), said signal-processing electronics means (441), and those components of said optical means (413) which include a light source (442), a plurality of photovoltaic detectors (443) and a collimating lens (444); the light source (442) and photovoltaic detectors (443) being carried on the inner face of a hollow barrel portion (445)   of      said first housing
sub-assembly (440) and said collimating lens
(444) being carried proximate the open end
of said barrel portion (445);

b)   said second housing sub-assembly (446)
     contains,   as another component of said
     optical means (413), a plane surface mirror
     (447)  carried on the inner end (448)
     of a   barrel portion (449)of the second
     housing sub-assembly (446), the two said
     housing barrel portions (445, 449) being
     shaped and dimensioned to mate one within
     the other with an interference fit therebetween
     to form a unitary structurally-integrated
     device;  and

c)   said first and second housing sub-assemblies
     (440,446) are mountable at spaced points on
     the aircraft structure.

5. A system according to Claim 2, characterised
in that the said optical means (410) of
the structural information detector comprises:

   a)   an elongate light-transmission member (461)
        formed of a light-transmitting flexible
        material and having a light-transmitting/
        receiving end (463) and a reflecting end;

   b)   a concentrating lens (462) formed in the
        reflecting end of the member (461);

   c)   a light source (464) carried by said light-
        transmitting/receiving end (463) of the
        member, the light source (464) being
        positioned such as to direct light through
        the member (461) toward said reflecting end;

d) light-receiving means (465) carried by the light-transmitting/receiving end (463) of the member, the light-receiving means (465) being arranged to receive light transmitted through said member from the light source (464) to the concentrating lens (462) and reflected thereby back through said member to the light-receiving means (465), and to generate electrical signals in response to the received light; and

e) means for connecting the said ends of the light-transmission member (461) to spaced points on the aircraft structure such that bending of the structure causes corresponding bending of the light-transmission member (461) and, in turn, causes a variation in the amount of light received by the light-receiving means (465).

6.    A machine for forming and/or bending metals characterised in that it is provided with a system according to any one of the preceding claims.

0074697

*FIG-1*

+6V

LED

$R_1$ = 4990 OHM
$R_2$ = 20 OHM
$T_1$ = $T_2$ = 2N2222
    OR EQUIVALENT
LED = LIGHT EMITTING DIODE

$T_1$

$R_2$

$T_2$

*FIG-2*

BIAS
CONTROL

$R_1$

$R_2$

OUTPUT

PV

$R_1$ = 1-10MΩ
$R_2$ = 100-700KΩ
PV = PHOTOVOLTAIC
    CELL

*FIG-3*

216

Fig. 4

STRUCTURAL BEHAVIOR (41)

SMD SENSOR ARRAY (42) — 43

SIGNAL PROCESSING AND BUFFERING (44) — 45

ANALOG TO DIGITAL CONVERSION (46) — 47

DATA PROCESSING (48) — 49

DATA RECORDING AND EDITING (50) — 53

DATA DISPLAY (52) — 51

Fig. 5

253 254 252 251

FIG. 6

DISPLAY 420b

RECORDING 420c

CONTROL 420d

420a

⊖₂ 418a

⊖ 418

410

416 416(a) 413 416 416a

412 OPTICAL SENSOR

F 417

417a

419a 414a 413b 413a

POWER 419 POWER SUPPLY SIGNAL PROCESSING

414 414b 415

SIGNAL CONVERSION 414c

420 USEFUL STRUCTURAL INFORMATION

415a

411a

d

411

FIG. 7

0074697

Fig. 8

Fig. 9

457
459
456 459
458
455
452
453
458
458
451
454

_Fig-10_

466
470
462
466
468
464
469
467 465
463 465 471 461

_Fig-11_

0074697